# EUROPÄISCHE PATENTSCHRIFT

(11) **EP 1 295 791 B1**
(45) Veröffentlichungstag und Bekanntmachung des Hinweises auf die Patenterteilung: **25.06.2008**
(21) Anmeldenummer: 02020587.8
(22) Anmeldetag: 17.09.2002
(51) Int. Cl.: B64D 45/00, B60R 25/00, G08B 15/00

(54) **Flugzeug-Sicherheitssystem zur Verhinderung des manuellen Flugbetriebs durch Unbefugte**
Aircraft safety system to prevent an unauthorized manual operation of the aircraft
Système de sécurité d'un aéronef pour empêcher l'utilisation frauduleuse du pilotage manuel

(30) Priorität: 19.09.2001 DE 10146170
(43) Veröffentlichungstag der Anmeldung: 26.03.2003
(73) Patentinhaber: Weigl, Adolf, Englewood, FL 34223 (US)
(72) Erfinder: Weigl, Adolf, Englewood, FL 34223 (US)
(74) Vertreter: Graf Lambsdorff, Matthias

(56) Entgegenhaltungen:
- WO-A-03/045740
- DE-A- 10 150 661
- FR-A- 2 584 842
- GB-A- 2 322 956
- US-A- 5 479 162

## Beschreibung

Die vorliegende Erfindung betrifft ein Sicherheitssystem für die Steuerung eines Luftfahrzeugs, insbesondere eines zivilen Passagier- oder Frachtflugzeugs nach dem Oberbegriff des Patentanspruchs 1 und ein Verfahren zur Verhinderung der manuellen Steuerung eines Flugzeugs durch Unbefugte gemäß Patentanspruch 11.

Die in jüngster Vergangenheit mit zivilen Verkehrsflugzeugen in den USA verübten Terroranschläge haben eine intensive Diskussion darüber ausgelöst, wie derlei Anschläge in Zukunft mit technischen Mitteln verhindert werden können. Es gilt zu verhindern, dass Flugzeugentführer, die der Steuerung des Flugzeugs fähig sind, das Flugzeug in ihre Gewalt bringen, um damit ein selbst ausgesuchtes Ziel anzufliegen und durch gezielten Aufprall verheerende Zerstörungen hervorzurufen.

Als eine Möglichkeit der Sicherheitsverbesserung wird eine verbesserte Sicherung des Cockpits des Flugzeugs diskutiert. Insbesondere wird eine abschließbare Tür des Cockpits in Erwägung gezogen, die entweder nur durch besondere Maßnahmen und/oder nur zu bestimmten Zeitpunkten entriegelt werden kann. Dieser Lösungsansatz wird jedoch aus verschiedenen Gründen für in der Praxis unbefriedigend erachtet. Zum einen werden die Möglichkeiten einer im Notfall erforderlichen Evakuierung des Flugzeugs vermindert, da für die Passagiere oder die Crew der Weg durch das Cockpit ins Freie nicht mehr ohne weiteres zur Verfügung steht. Zum anderen ist auch eine verriegelte Cockpit-Tür nur von geringem Nutzen, wenn Flugzeugentführer, die sich im Passagierraum befinden, den Piloten mit der Androhung von Gewalt gegen die Passagiere und die Crew zur Entriegelung der Cockpit-Tür zwingen.

Die Druckschrift GB-A-2 322 956 beschreibt ein Diebstahlsicherungssystem für ein Kraftfahrzeug, welches eine Detektionseinrichtung zum Detektieren des Gewichts einer in dem Fahrersitz sitzenden Person, einer Speichereinrichtung zum Speichern eines Referenzgewichtswerts, Vergleichsmitteln zum Vergleichen des detektierten Gewichtswerts mit dem gespeicherten Gewichtswert und eine Steuereinrichtung zum Bereitstellen eines Ausgangssignals in Abhängigkeit von dem Vergleich für die Steuerung einer Wegfahrsperre und/oder eines Alarmsignals aufweist.

Es ist dementsprechend Aufgabe der vorliegenden Erfindung, eine technische Einrichtung und ein Verfahren bereitzustellen, durch die die Steuerung und Lenkung eines Luftfahrzeugs durch Unbefugte sicher verhindert werden kann. Vorteilhafte Ausgestaltungen und Weiterbildungen der Erfindung sind in den Unteransprüchen angegeben.

In vielen heutigen Passagier- und Frachtflugzeugen werden Primär-Flugsteuersysteme eingesetzt, die mit elektrischen Signalen versorgt und gewöhnlich als "Fly-by-Wire"-Flugsteuerungen bezeichnet werden. Solche elektrischen/elektronischen Systeme weisen Wandlerelemente auf, die die an den im Cockpit befindlichen Steuerungseinrichtungen (Rad, Knüppel und Pedale) erzeugte mechanische Bewegung in elektrische Impulse umwandeln. Diese werden über elektrische Verbindungsleitungen in einem zentralen Flugcomputer zusammengeführt und von dort wiederum durch elektrische Verbindungsleitungen den Steuerrudern des Flugzeugs (Querruder, Höhenruder, Seitenruder) zugeführt. Die zu den Steuerrudern führenden elektrischen Verbindungsleitungen sind mit elektrisch-mechanischen Wandlern verbunden, in welchen die elektrischen Impulse in mechanische Bewegungen zum Antrieb der Steuerruder umgesetzt werden.

Zusätzlich kann ein Autopilot-Flugleitrechner vorgesehen sein, in welchem Zielkoordinaten und die Flugroute und dergleichen eingegeben werden. Wenn der Autopilot aktiviert ist, so werden durch diesen entweder die im Cockpit befindlichen Steu-erungseinrichtungen selbst bewegt, positioniert und arretiert oder von den Steuereinrichtungen entkoppelte, nachgelagerte mechanische Elemente. Jedenfalls ist bei Aktivierung des Autopiloten eine manuelle Steuerung des Flugzeugs durch Betätigen der im Cockpit befindlichen Steuerungseinrichtungen nicht mehr möglich.

Das vorstehend beschriebene "Fly-by-wire"-Steuerungssystem mit zusätzlichem Autopilot ist beispielsweise in der europäischen Patentschrift EP 0 885 411 B1 beschrieben.

Ein mit einem solchen Steuerungssystem durchführbarer Flugzeug-Start-Landungsablauf ist beispielsweise - vereinfacht dargestellt (ohne Berücksichtigung der Antriebsaggregate) - durch die folgenden Verfahrensschritte gegeben.
1. Hauptschalter auf ON
2. Eingabe Ziel-Koordinaten Autopilot
3. Autopilot auf OFF
4. Manuelle Steuerung auf ON
5. Start
6. Umschaltung Autopilot von OFF auf ON → (Flugverlauf)
7. Umschaltung Autopilot von ON auf OFF
8. Landung, manuelle
9. Hauptschalter auf OFF.

Für das Ein- bzw. Ausschalten des Autopiloten (nicht für dessen Programmierung) gibt es zumeist drei Möglichkeiten. Zum einen weist das Gerät des Autopiloten selbst, welches sich etwa in Kopfhöhe zwischen Pilot und Copilot befindet, einen Hauptschalter auf, welcher von dem Piloten mit seinem rechten Arm bzw. dem Copiloten mit seinem linken Arm betätigt werden kann. Des weiteren gibt es je einen Knopfschalter an den beiden Lenksäulen, den sogenannten "Emergency-Button". Dieser Knopf wird wirklich nur dann benötigt, wenn der Pilot in der Luft z.B. einen Zusammenstoß mit einem anderen Flugzeug befürchtet und blitzschnell den bestehenden Kurs ändern muss. Durch Drücken dieses Knopfschalters wird in Bruchteilen von Sekunden der Autopilot außer Funktion gesetzt.

Ein wesentlicher Gedanke der vorliegenden Erfindung besteht darin, den manuellen Flugbetrieb nur bei Einhaltung bestimmter vorgegebener und elektrisch/elektronisch überprüfbarer Bedingungen zu ermöglichen. Diese Bedingungen sind derart, dass in einer gegebenen Situation praktisch nur der Pilot in der Lage ist, das Steuersystem in den manuellen Flugbetrieb umzuschalten und diesen Zustand aufrecht zu erhalten.

Das erfindungsgemäße Sicherheitssystem sorgt dafür, dass bei Nichteinhaltung der Bedingungen eine Umschaltung von automatischem auf manuellen Flugbetrieb verhindert wird, falls automatischer Flugbetrieb eingestellt ist, und falls manueller Flugbetrieb eingestellt ist, von dem manuellen Flugbetrieb auf den automatischen Flugbetrieb umgeschaltet oder der manuelle Flugbetrieb deaktiviert wird.

Die erfindungsgemäß vorgesehenen Bedingungen zur Inbetriebnahme des manuellen Flugbetriebes sind durch bestimmte körperliche Merkmale gegeben, die auf den Piloten zutreffen und laufend überwacht werden. Entscheidend ist hierbei, dass in einer Entführungssituation, d.h. einer Situation, in welcher der Pilot gewaltsam von seinem Sitz entfernt wird, bestimmte physische Parameter mindestens kurzzeitig signifikant verändert werden. Nachdem beispielsweise der Pilot von seinem Sitz entfernt worden ist, lastet auf dem betreffenden Sitz so lange kein nennenswertes Gewicht, bis der Entführer darin mit der Absicht Platz genommen hat, die Maschine durch manuellen Flugbetrieb in ein selbst gewähltes Ziel zu lenken. Die Mittel zur Detektion körperlicher Merkmale können also im einfachsten Fall durch einen Gewichtssensor gegeben sein, der in der Lage ist, das Vorhandensein eines bestimmten Mindestgewichts, beispielsweise 50 kg, festzustellen. Es genügt dabei, wenn für einen Bruchteil einer Sekunde diese 50 kg unterschritten werden, um das Sicherheitssystem zu aktivieren. Der Gewichtssensor kann ein mechanisch oder hydraulisch arbeitender Druckschalter sein. Die Mittel zur Verhinderung der Aktivierung des manuellen Flugbetriebs können durch ein oder mehrere Relais oder andere elektrische, elektronische oder elektromagnetische Schaltvorrichtungen gegeben sein, die jeweils unmittelbar in die Steuerstromleitung von jedem der für die Umschaltung von Autopilot auf Handbetrieb vorgesehenen Schalter (s.o.) geschaltet werden. In der Praxis wird je ein Relais an den beiden Lenksäulen sowie ein Relais in dem Hauptapparat des Autopiloten unmittelbar in den Steuerstrom nach dem Schalter geschaltet. Die Relais sind jeweils mit beiden Gewichtssensoren des Piloten- und des Copilotensitzes verbunden und werden sämtlich aktiviert, wenn sie von einem Gewichtssensor ein entprechendes Aktivierungssignal erhalten, so dass mit keinem Schalter mehr von Autopilot auf Handbetrieb umgeschaltet werden kann. Vorteilhafterweise werden die Relais nicht von dem bestehenden Bord-Stromnetz sondern von einer eigenen Stromversorgung, z.B. einer 12-Volt-Batterie versorgt, welche wiederum aus dem Bordnetz gespeichert bzw. aufgeladen werden kann. An diesen eigenen (Batterie-)Stromkreis sind auch die Displays für die persönliche Code-Eingabe der Piloten angeschlossen, die noch erläutert werden wird.

Der genannte Gewichtssensor oder Druckschalter kann auch so ausgelegt sein, dass er zusätzlich eine obere Gewichtsgrenze, beispielsweise 150 kg, detektiert und bei Überschreiten dieser oberen Gewichtsgrenze ebenfalls eine Funktion zur Verhinderung des Umschaltens von Autopilot auf Handbetrieb auslöst. Damit kann der Situation vorgebeugt werden, dass sich der Entführer in Kenntnis des Sicherheitssystems zunächst ebenfalls auf den Pilotensitz setzt und dann erst versucht, den Piloten von dem Sitz zu entfernen, so dass das in dem Gewichtssensor eingestellte Gewichtsminimum zwar nicht unterschritten wird, jedoch ein bestimmtes Gewichtsmaximum überschritten wird. Die Gewichtsgrenzen bei den Gewichtssensoren der beschriebenen Art (Einfach- oder Doppelfunktion) können wählbar und einstellbar sein, so dass stets nur die Unterschreitung oder Überschreitung der eingestellten Gewichtsgrenzen die Funktion des Schalters auslöst und somit die Relais zum Schließen oder Öffnen der Autopilotschalter-Stromkreise betätigt.

Vor Beginn des Flugbetriebes gibt der Pilot bzw. Copilot in eine Eingabeeinrichtung (kann mit zusätzlichem Display versehen sein) einen jeweils eigenen Code ein, mit welchem sie sich jederzeit im späteren Verlauf des Flugbetriebes zum Umschalten von Autopilot auf Handbetrieb legitimieren können. Vor dem freiwilligen Verlassen seines Sitzes kann der Pilot somit seinen persönlichen Code in die Eingabeeinrichtung erneut eingeben, um die Normalität des Flugverlaufs zu bestätigen. Ebenso kann es passieren, dass der Pilot von Zeit zu Zeit Bewegungen ausführt, durch die sich eine Gewichtsentlastung des Sitzes bis unterhalb der unteren Gewichtsschwelle des Gewichtssensors ergibt, so dass der Gewichtssensor die Sicherheitsfunktion auslöst. Dies kann dem Piloten auf geeignete Weise - optisch und/oder akustisch - mitgeteilt werden, so dass er aufgefordert ist, sich durch Eingabe seines persönlichen Codes erneut zu legitimieren. Die Eingabeeinrichtungen sind so ausgebildet, dass sie bei Eingabe des richtigen Codes durch Pilot oder Copilot das Sicherheitssystem wieder deaktivieren, etwa indem die Relais wieder in die Ausgangsposition zurückgestellt werden. Die beiden Eingabeeinrichtungen von Pilot und Copilot werden ebenfalls von dem Stromkreis der unabhängigen Batterie versorgt.

In einer Ausführungsform enthalten die Mittel zur Verhinderung der Aktivierung des manuellen Flugbetriebes 3 Relais, die jeweils mit beiden Gewichtssensoren des Pilotensitzes und des Copilotensitzes verbunden sind. Selbst wenn zwei davon aus irgendeinem Grund nicht funktionieren sollten, wird eines noch immer in der Lage sein, die Umschaltung Autopilot auf Handbetrieb zu verhindern.

Allgemein können die erfindungsgemäßen Verhinderungsmittel je nach Ausgestaltung des Sicherheitssystems durch die Detektionsmittel selbst, etwa Gewichtssensoren, oder durch die bereits genannte Eingabevorrichtung bzw. in ihr enthaltene Komponenten wie einen Prozessor oder Vergleicher, oder durch mehrere der vorgenannten Einrichtungen in Zusammenwirkung mit Schaltkreisen gegeben sein, durch die eine Umschaltung von Autopilot auf manuellen Betrieb unterbrochen werden kann.

Bei Gewichtssensoren wird im Prinzip nur die Einhaltung eines Gewichtsbereichs überwacht. Die erfindungsgemäß vorgesehenen Bedingungen zur Inbetriebnahme des manuellen Flugbetriebs können jedoch auch durch spezifische körperliche Merkmale gegeben sein, die in der Praxis und bei einer gegebenen Situation nur durch einen bestimmten Piloten repräsentiert werden können. Da es sich bei dieser Variante um bestimmte körperliche Merkmale des Piloten handelt, sind diese in irgendeiner Form zu hinterlegen und in einer gegebenen Situation mit den körperlichen Merkmalen einer Bedienperson zu vergleichen, worauf von einer Rechner- oder Prozessoreinheit entschieden werden muss, ob der manuelle Flugbetrieb für die Bedienperson freigegeben werden kann oder nicht. Es kann theoretisch vorgesehen sein, dass diese Aufgabe von dem Flugcomputer mit übernommen wird. Vorteilhafter ist es jedoch in diesem Fall, wenn die Rechner- oder Prozessoreinheit an eine autarke Stromversorgung wie eine Batterie angeschlossen ist. Unabhängig davon ist die den Vergleich ausführende Einheit vorzugsweise wie die Gewichtssensoren des obigen Ausführungsbeispiels mit den Relais der Autopilot-Handbetrieb-Umschalter Stromkreise verbunden, um diese zu aktivieren und damit die Umschaltung zu unterbinden, falls der Vergleich ergibt, dass die körperlichen Merkmale der Bedienperson nicht mit den gespeicherten Merkmalen übereinstimmt.

Die spezifischen körperlich-physischen Merkmale des Piloten können vor dem Start des Flugzeugs in einer Speichereinheit des autarken Sicherheitssystems abgelegt werden. Diese Merkmale können beispielsweise in digitaler Form auf einer Diskette gespeichert sein und vor dem Start der Maschine in das Sicherheitssystem eingegeben werden. In den meisten Fällen dürfte es sich jedoch als vorteilhafter erweisen, die körperlichen Merkmale des Piloten während einer sogenannten Initialisierungsphase vor dem Start des Flugzeugs durch geeignete Sensoreinrichtungen zu erfassen und die durch die Sensoreinrichtungen ermittelten Daten und/oder Werte in die Speichereinheit des Sicherheitssystems zu übertragen.

Wie bereits im Zusammenhang mit der zuerst genannten Ausführungsform der Erfindung angegeben, können die körperlichen Merkmale durch das auf dem Pilotensitz lastende Gewicht bestimmt sein. Bei dieser Ausführungsform war es ausreichend, eine untere Gewichtsgrenze oder einen Gewichtsbereich zwischen einer unteren und einer oberen Gewichtsgrenze festzulegen und das Abweichen dieser Toleranzwerte durch einen Gewichtssensor zu detektieren. Eine weitergehende Ausführungsform der Erfindung besteht darin, dass die körperlichen Merkmale durch das tatsächliche Gewicht des Piloten bestimmt sind. Da das Gewicht eines Menschen im Laufe der Zeit veränderlich ist, ist es in diesem Fall von Vorteil, dass Gewicht des Piloten während der Initialisierungsphase vor dem Start des Flugzeugs zu ermitteln. Dazu ist vorteilhafterweise in den Pilotensitz eine Waage integriert, durch die das Gewicht der in dem Pilotensitz sitzenden Bedienperson detektiert und elektronisch an eine Speichereinheit des Sicherheitssystems übermittelt wird. Auf diese Weise wird vor dem Start der Maschine das Gewicht des Piloten gemessen und in dem Sicherheitssystem abgespeichert. Wenn zu einem späteren Zeitpunkt eine Inbetriebnahme des manuellen Flugbetriebs herbeigeführt werden soll, so wird erneut das auf der Sitzwaage lastende Gewicht detektiert und mit dem zuvor gemessenen und gespeicherten Gewicht des Piloten verglichen.

Insofern die zu vergleichenden Werte nur um eine vorgegebene Toleranzbandbreite auseinander liegen, wird der manuelle Flugbetrieb freigegeben. Sobald jedoch die zu vergleichenden Gewichtswerte um mehr als die Toleranzbandbreite auseinander liegen, wird ein Umschalten in den manuellen Flugbetrieb blockiert.

Dabei kann in dem Sicherheitssystem vorgesehen sein, dass nicht nur eine Blockade des Umschaltens von dem automatischen in den manuellen Flugbetrieb ermöglicht wird, sondern dass auch während des manuellen Flugbetriebs in bestimmten Zeitabständen das aktuelle, auf der Sitzwaage lastende Gewicht der Bedienperson gemessen, gegebenenfalls über mehrere gemessene Werte gemittelt und mit dem eingespeicherten Wert verglichen wird. Wenn die hierdurch ermittelte Abweichung in signifikanter Weise größer ist als die bereits genannte Toleranzbandbreite, so wird der eingestellte manuelle Flugbetrieb deaktiviert und es wird gegebenenfalls zum automatischen Flugbetrieb (Autopilot) zurückgekehrt.

Durch die vorliegende Erfindung kann somit im Entführungsfall eines Flugzeugs verhindert werden, dass der oder die Entführer nach Ausschaltung des Piloten und des Copiloten das Steuer der Maschine übernehmen und durch manuelle Steuerung ein selbtgewähltes Ziel angreifen. Die Entführer werden in aller Regel keinen unter sich haben, der annähernd das selbe Gewicht wie der Pilot aufweist. Wenn daher einer der Entführer nach der Ausschaltung des Piloten auf dem Pilotensitz Platz nimmt, so stellt das erfindungsgemäße Sicherheitssystem fest, dass sein Gewicht von dem eingespeicherten Wert des Gewichtes des Piloten signifikant abweicht und verweigert daraufhin den Übergang zum manuellen Flugbetrieb. Falls jedoch bereits der manuelle Flugbetrieb eingestellt ist und der Entführer sich anstelle des Piloten auf dem Pilotensitz zur Steuerung des Flugzeugs niederlässt, so wird infolge der in relativ kurzen Zeitabständen durchgeführten Messung seines Gewichts nach kurzer Zeit festgestellt, dass dieses nicht mit dem eingespeicherten Gewichtswert des Piloten übereinstimmt und folglich wird ein Befehl ausgelöst, durch den der manuelle Flugbetrieb beendet und zum automatischen Flugbetrieb, d.h. dem Autopilot-Zustand zurückgekehrt wird.

Natürlich muss unter allen Umständen verhindert werden, dass ein gewünschtermaßen von dem Piloten eingestellter manueller Betriebszustand systembedingt verlassen und in den automatischen Betriebszustand gewechselt wird. Durch haltungsbedingte Gewichtsverlagerungen des Piloten in dem Pilotensitz kann es beispielsweise passieren, dass durch die Sitzwaage zeitweise ein falsches Gewicht gemessen und übermittelt wird. Dem kann dadurch begegnet werden, dass das Gewicht in regelmäßigen Zeitabständen erneut gemessen und über eine Mehrzahl von Messwerten gemittelt wird. Zusätzlich oder anstelle dessen kann auch eine gewisse Zeitdauer bis zu einer Entscheidung über die Umschaltung abgewartet werden, bis sicher feststeht, dass sich das Gewicht signifikant geändert hat.

Praktisch alle vorhandenen Luftfahrzeuge können manuell nur von der Sitzposition im Pilotensitz gesteuert werden. Bei einem Verbleib des Piloten im Pilotensitz kann zwar aufgrund einer korrekten Gewichtsermittlung eine Umschaltung in den manuellen Betriebszustand erfolgen; zur manuellen Steuerung ist es dann jedoch erforderlich, den Piloten aus dem Pilotensitz zu entfernen und selbst eine Sitzposition darin einzunehmen. Aus den bereits geschilderten Gründen kehrt dann das Sicherheitssystem automatisch aus dem manuellen Betriebszustand in den Autopilot-Zustand zurück.

Das erfindungsgemässe Sicherheitssystem basiert darauf, dass ein Autopilot vorhanden ist. Es ist jedoch nicht unbedingt erforderlich, dass eine "Fly-by-wire"-Steuerung vorhanden ist. Prinzipiell kann es auch bei Luftfahrzeugen ohne eine derartige elektrische/elektronische Steuerung eingesetzt werden.

Es muss weiterhin die Möglichkeit in Betracht gezogen werden, dass einer der beiden Piloten aus natürlichen Gründen (Übelkeit, Herzinfarkt) nicht in der Lage ist, während des Fluges seine Arbeit zu verrichten und gegebenenfalls sogar seinen Pilotensitz verlassen muss. In einer solchen Notsituation ist es dann erforderlich, dass der verbleibende Pilot technisch in der Lage ist, den Flug- bzw. Landeprozess alleine auszuführen. Eine bereits angesprochene technische Möglichkeit zur Überwindung dieses Problems ist darin zu sehen, dass der ursprünglich am Beginn der Flugvorbereitung eingegebene geheime Code der beiden Piloten eine Deaktivierung des Autopiloten auch ohne permanente Sitzbelastung ermöglicht. Es ist dabei nicht anzunehmen, dass im Entführungsfall ein eventuell noch am Leben und in der Kabine befindlicher Pilot den Entführern freiwillig den Geheimcode verraten würde, um somit die Maschine vollends in die Gewalt der Entführer zu geben.

Eine weitere sinnvolle Ergänzung des erfindungsgemäßen Sicherheitssystems könnte darin bestehen, dass während der Start- und Landephase, also während Phasen, in denen sich die Maschine im manuellen Betriebszustand befindet, die Trenntüren zwischen Kabine und Passagierraum von innen automatisch verriegelt werden, um somit während dieser Zeiträume keinen Zutritt zum Cockpit zu ermöglichen.

Die körperlichen Merkmale können auch andere als das Körpergewicht des Piloten sein. Andere denkbare körperlich-physische Erkennungsmerkmale sind beispielsweise die Regenbogenhaut (Iris) des Auges, die Stimme des Piloten oder auch sein Finger- und/oder Handabdruck.

Die Iris des Piloten kann beispielsweise durch eine geeignet positionierte Bildaufnehmereinrichtung (Kamera) aufgenommen werden und in einer Bilddatei einer Speichereinrichtung des Flugcomputers gespeichert werden. Wenn dann zu einem späteren Zeitpunkt eine Umschaltung des automatischen Flugbetriebs in den manuellen Flugbetrieb erfolgen soll, kann durch ein und dieselbe Kamera die Iris derjenigen Bedienperson erfasst werden, die durch Betätigung des Autopilot/Manuell-Umschalters den Befehl zum Umschalten auf manuellen Flugbetrieb gegeben hat. Dann kann eine entsprechend erzeugte Bilddatei mit der vorab abgespeicherten Bilddatei verglichen werden. Falls der manuelle Betriebszustand bereits eingestellt ist, so kann nachfolgend in regelmäßigen Zeitabständen die Iris der Bedienperson erfasst und ebenfalls mit den abgespeicherten Daten verglichen werden. Auch hier gilt, dass eine Umschaltung in den manuellen Betriebsmodus entweder erst gar nicht erfolgt oder von dem bereits eingestellten manuellen Betriebsmodus in den Autopilot-Modus zurückgeschaltet wird, sobald sich signifikante Unterschiede in den zu vergleichenden Daten ergeben.

Die körperlich-physischen Merkmale können des Weiteren durch die Stimme des Piloten gegeben sein, in diesem Fall ist jedoch eine laufende Überprüfung während eingestelltem manuellen Betriebszustand etwas problematisch, da der Pilot hier theoretisch ständig Stimmproben abgeben müsste, um dem System seine Berechtigung nachzuweisen.

Eine weitere Möglichkeit besteht darin, dass die körperlichen Merkmale durch einen Finger- und/oder Handabdruck des Piloten gebildet werden. Hier besteht jedoch das Problem ebenso darin, dass der Pilot zum Nachweis seiner Zugangsberechtigung ständig einen Finger oder eine Hand in bestimmten Zeitabständen auflegen müsste.

Es können jedoch auch mehrere der vorher genannten körperlichen Merkmale miteinander kombiniert werden, wobei entsprechende verschiedene Detektionsmittel vorgesehen werden müssten, um die entsprechenden körperlichen Merkmale zu erfassen.

Die wesentlichen Merkmale eines erfindungsgemäßen Sicherheitssystems bestehen nach allem zuvor Gesagten somit in Mitteln zur Detektion körperlicher Merkmale von Personen und Mitteln zur Verhinderung der Aktivierung des manuellen Flugbetriebs oder zur Umschaltung von manuellen auf automatischen Flugbetrieb oder zu Deaktivierung des manuellen Flugbetriebs, falls die von den Detektionsmitteln erfassten körperlichen Merkmale nicht mit vorgegebenen körperlichen Merkmalen übereinstimmen.

Je nach der Art der zu erfassenden und zu vergleichenden körperlichen Merkmale bestehen die Detektionsmittel entweder in einem Gewichtssensor, also insbesondere eines Druckschalters oder einer in den Pilotensitz integrierten Waage, einer Bildaufnehmereinrichtung wie einer Kamera, einem Mikrophon oder einem Finger- und/oder Handabdrucksensor oder einer Kombination aus mehrerer der vorgenannten Einrichtungen. Ein mechanisch oder hydraulisch arbeitender Druckschalter hat den Vorteil, dass er nicht notwendigerweise im oder unter dem Pilotensitz angeordnet sein muss. Insbesondere wenn durch das auf dem Pilotensitz lastende Gewicht eine Flüssigkeit in einem Röhrchen unter Druck gesetzt wird, so kann sich der eigentliche Schalter auch außerhalb des Pilotensitzes befinden.

Die Mittel zur Verhinderung der Aktivierung des manuellen Flugbetriebs sind mit den Detektionsmitteln elektronisch verbunden und können in einfacher Weise durch bloße Relaisschaltungen oder in komplizierterer Weise durch zusätzliche Rechner- oder Prozessoreinheiten mit Speicherund Vergleichseinrichtungen gegeben sein. Darin können eine Speichereinrichtung zum Speichern von Daten von körperlichen Merkmalen sowie eine Vergleichereinrichtung zum Vergleichen von Daten von körperlichen Merkmalen enthalten sein. Mit diesen Einrichtungen kann eine weitere Einrichtung zum Aktivieren/Deaktivieren des Autopilot-Betriebszustands verbunden sein.

Im Folgenden wird ein Ausführungsbeispiel des erfindungsgemäßen Sicherheitssystems anhand der Zeichnungen näher erläutert. Es zeigen:
- Fig. 1: eine schematische Blockdarstellung eines elektronischen "Fly-by-Wire"-Steuerungssystems eines Flugzeugs, in welchem ein erfindungsgemäßes Sicherheitssystem enthalten ist;
- Fig. 2: einen Start-Landungsablauf unter Verwendung eines erfindungsgemässen Sicherheitssystems.

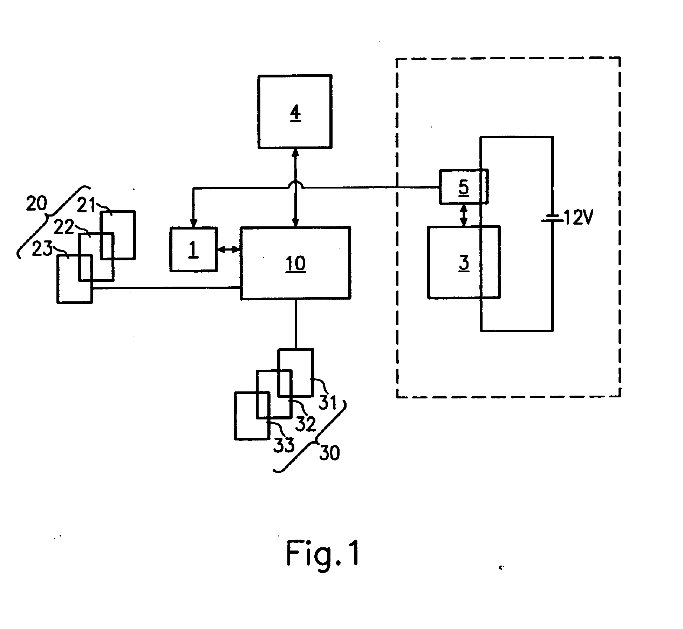

Fig. 1 zeigt eine prinzipielle Blockdarstellung einer elektronischen "Fly-by-Wire"-Flugsteuerung, wie sie heutzutage in den meisten Verkehrsflugzeugen vorhanden ist.

Im Cockpit des Piloten befinden sich Steuereinrichtungen, mit denen der Pilot die Steuerruder des Flugzeugs bedienen kann. Der Copilot verfügt an seinem Sitz über die selben Steuerungseinrichtungen, welche mit denen des Piloten durch ein Gestänge mechanisch verbunden sind.

Es gibt drei Steuereinrichtungen, mit denen das Flugzeug um die drei orthogonalen Achsen gedreht werden kann. Durch Drehung des Handrades wird das an den Tragflächen angebrachte Querruder betätigt. Durch Verschwenken des Steuerknüppels, an welchem das Handrad befestigt ist, wird das Höhenruder betätigt. Durch die Pedale wird schließlich das Seitenruder in Bewegung gesetzt.

In "Fly-by-Wire"-Steuersystemen wird die mechanische Bewegung der Steuereinrichtungen durch mechanisch-elektrische Wandler (nicht dargestellt) in elektrische Impulse umgesetzt, die in einem Flugcomputer 10 zusammenlaufen und von dort an die verschiedenen Steuerruder weitergeleitet werden. Dort werden sie durch elektrisch-mechanische Wandler (nicht dargestellt) in mechanische Bewegungen zum Antrieb der Steuerruder umgewandelt.

In den meisten Maschinen ist ferner ein Autopilot-Leitrechner 1 vorgesehen, der entweder Teil des Flugcomputers 10 ist oder als selbständiges Datenverarbeitungsmodul an den Flugcomputer 10 angeschlossen ist. In den Autopilot-Leitrechner 1 können Zielkoordinaten eines anzufliegenden Ziels sowie anderer Daten wie Flugroute, Flugkorridore sowie Flughöhe eingegeben werden. Wenn der Autopilot-Leitrechner 1 durch den Flugcomputer 10 aktiviert wird, so sorgt er auf der Basis dieser eingegebenen Daten dafür, dass die Steuereinrichtungen 20 derart geführt werden, dass das Flugzeug eine gewünschte Flugroute einhält. Die aktuelle geographische Position des Flugzeugs kann dabei durch ein Kompass-System oder durch das Global Positioning System (GPS) in bestimmten Zeitabständen ermittelt und dem Autopilot-Leitrechner 1 zugeführt werden, worauf er entsprechende Befehle zur Änderung der Stellung der Steuereinrichtungen 20 ausgibt. Im Falle der Aktivierung des Autopilot-Leitrechners 1 können die Steuereinrichtungen 20 dann nicht mehr manuell von dem Piloten bedient werden.

Dem Piloten stehen des Weiteren in an sich bekannter Weise weitere Bedienfunktionen, Schaltelemente und Sichtanzeigen zur Verfügung, die schematisch in Form einer Schaltkonsole 4 dargestellt ist, die mit dem Flugcomputer 10 verbunden ist. Die in der Fig. 1 gestrichelt umrahmte Ausführungsform eines erfindungsgemäßen Sicherheitssystems weist Detektionsmittel 3 und eine Eingabevorrichtung 5 auf. In einer bereits beschriebenen Ausführungsform der Erfindung weisen die Detektionsmittel 3 eine in den Pilotensitz eingebaute elektronische Waage auf, durch die das tatsächliche Gewicht der in dem Pilotensitz sitzenden Bedienperson ermittelt und mit einem abgespeicherten Gewichtswert verglichen werden kann.

Die Eingabevorrichtung 5 dient in erster Linie der Eingabe eines Codes durch Tastatur oder Spracheingabe, wodurch der Pilot sich dem Sicherheitssystem gegenüber legitimieren kann. Der Pilot gibt vor Beginn des Fluges einen nur ihm selbst bekannten persönlichen Code ein und kann jederzeit später nach erneuter Eingabe dieses Codes beispielsweise seinen Sitz verlassen, ohne dass das Sicherheitssystem aktiviert und damit die Umschaltung auf Handbetrieb blockiert wird. Die Eingabevorrichtung 5 kann mit einem Display zur Anzeige eingegebener Daten und gegebenenfalls anderer Informationen ausgerüstet sein. Vorteilhafterweise besitzen Pilot und Copilot je eine derartige Eingabevorrichtung 5 in Form eines Handgeräts, um sich durch Eingabe jeweils eigener persönlicher Codes dem Sicherheitssystem gegenüber zu legitimieren. Die Eingabevorrichtung 5 kann in sich noch weitere Funktionen je nach der Ausgestaltung des Sicherheitssystems beinhalten. Sie kann eine Speichereinheit zum Abspeichern individueller körperlicher Merkmale des Piloten, eine Vergleichereinheit und eine Prozessoreinheit enthalten. Es kann beispielsweise vorgesehen sein, dass durch eine geeignete Steuerung seitens der Eingabevorrichtung 5 und ihrer Komponenten das Gewicht kontinuierlich in bestimmten Zeitabständen ermittelt und in der Eingabevorrichtung 5 ausgewertet wird. Dieser Zustand einer kontinuierlichen Gewichtsmessung kann insbesondere dann aktiviert sein, wenn der Autopilot-Leitrechner 1 deaktiviert ist, d.h. ein manueller Flugbetrieb eingestellt ist. In diesem Fall ist es von Bedeutung, ständig zu kontrollieren, ob die den manuellen Flugbetrieb durchführende Bedienperson die notwendige Berechtigung hierfür hat, ob demzufolge die Bedienperson ein durch die Detektionsmittel 3 ermitteltes Körpergewicht hat, welches dem Körpergewicht des Piloten entspricht.

In der dargestellten Ausführungsform der Fig. 1 ist die Eingabevorrichtung 5 mit dem Autopiloten 1, d.h. insbesondere mit den Schaltkreisen für die Deaktivierung des Autopiloten und die Umschaltung auf Handbetrieb verbunden und übernimmt die Steuerung der Relais' aufgrund der von den Detektionsmitteln 3 erhaltenen Signale. Die Eingabevorrichtung 5 bzw. eine in ihr enthaltene Steuereinrichtung wie ein Prozessor können derart eingestellt sein, dass sie kein Signal an die Relais' abgeben, wenn der Pilot seinen Sitz verlassen will und vorbeugend seinen Code zur erneuten Legitimierung in die Eingabevorrichtung eingibt.

Mit einem derart konfigurierten erfindungsgemäßen Sicherheitssystem kann folgender Ablauf während normaler Flugbedingungen realisiert werden. Bei einem normalen Flugverlauf von A nach B ist der Autopilot auf "ON" eingestellt. Der Pilot möchte, aus welchem Grund auch immer, seinen Sitz verlassen. Bevor er seinen Sitz zurückschiebt, drückt er seinen vor Beginn des Fluges am Boden eingegebenen persönlichen Code in die Eingabevorrichtung 5, steht auf und verlässt seinen Sitz, woraufhin trotz Gewichtsveränderung von dem Sicherheitssystem nichts weiter veranlasst wird. Der Autopilot ist weiterhin auf "ON", während der Copilot sich nach wie vor auf dem rechten Sitz befindet. Es wird auch von dem Sicherheitssystem kein akustisches Signal abgegeben. Nachdem der Pilot auf seinen Sitz zurückgekehrt ist, passiert zunächst auch noch nichts. Erst nach einer bestimmten einstellbaren Zeitspanne, etwa ein paar Minuten, ertönt ein akustisches Signal seitens des Sicherheitssystems, um den zurückkehrenden Piloten daran zu erinnern, dass sein Sitz in der Zwischenzeit leer war und wieder neu "codiert" werden muss, um die Legitimität seiner Anwesenheit zu bestätigen. Drückt er daraufhin seinen persönlichen Code in die Eingabevorrichtung 5, kann er wiederum jederzeit die Position "Autopilot ON" verlassen. Bei einer Flugzeugentführung würde sich folgender Ablauf einstellen. Der oder die Piloten werden vielleicht erstmals aufgefordert, sich aus ihren Sitzen zu entfernen. Währenddessen steht der Autopilot weiterhin auf "ON". Es ist unwahrscheinlich anzunehmen, dass der Pilot oder der Copilot vor dem Verlassen des jeweiligen Sitzes seinen persönlichen geheimen Code in die Eingabevorrichtung eingibt. Nimmt dann einer der Entführer, mit oder ohne Gewaltanwendung auf einem der Pilotensitze platz, um das Flugzeug selbst steuern zu wollen, muss er gezwungenermaßen den Autopiloten ausschalten. Das geht jetzt aber nicht mehr, da das Sicherheitssystem aufgrund der kurzzeitig erfolgten Gewichtsmess-Unterbrechung während des erzwungenen Pilotenwechsels dies verhindert. Gleichzeitig ertönt ein akustisches Signal seitens des Sicherheitssystems, welches zur Eingabe des Codes auffordert. Dies ist den Entführern jedoch nicht möglich, so dass sie die Umschaltung auf manuellen Betrieb nicht bewirken können. Erfolgt keine Code-Eingabe unmittelbar nach der ersten Signalaufforderung, ertönt das akustische Signal im kurzen Abstand nochmals und dann in einem noch kürzeren Abstand ein drittes Mal. Erfolgt nach dieser dritten akustischen Aufforderung keine Eingabe der Codes von zumindest einem der Piloten, gibt es eine einfache aber sehr wirkungsvolle technische Lösung, um der Außenwelt mitzuteilen, dass in diesem Flugzeug etwas nicht in Ordnung ist. Ein kleiner, aber leistungsstarker Sender sendet zum nächsten Empfänger/Flugplatz ein stilles Notsignal mit Angabe der nur auf das Flugzeug spezifisch bezogenen Daten. Die Position der in Not geratenen Maschine vom Boden aus festzustellen, ist dann kein Problem mehr, worauf Gegenmaßnahmen getroffen werden könnten.

Die Eingabevorrichtung 5 und die Detektionsmittel 3 können vorteilhafter Weise wie dargestellt an eine eigene Stromversorgung wie eine 12V-Batterie angeschlossen sein, wodurch ein Bordnetz-unabhängiges Sicherheitssystem bereitgestellt wird.

Wie ebenfalls bereits weiter oben erwähnt wurde, können die Detektionsmittel 3 in einer einfachen und bevorzugten Ausführungsform auch als relativ einfache Gewichtssensoren ausgebildet sein, durch die lediglich das Einhalten einer unteren und gegebenenfalls einer oberen Gewichtsgrenze überwacht wird. In diesem Fall können die Gewichtssensoren auch direkt mit den Relaisschaltungen des Autopiloten 1 verbunden sein und brauchen nicht direkt mit der Eingabevorrichtung 5 verbunden zu sein. Letztere kann dann entweder mit den Relaisschaltungen oder mit der Verbindungsleitung zwischen den Relaisschaltungen und den Gewichtssensoren verbunden sein, um die bereits beschriebene pilotenseitig durch Code-Eingabe angeforderte Abschaltung der Sicherheitsfunktion zu ermöglichen.

Die Relaisschaltungen sollten nach Möglichkeit derart beschaffen und mit den Detektionsmitteln 3 gekoppelt sein, dass bei bereits eingestelltem Handbetrieb der Flugzeugsteuerung eine von den Detektionsmitteln 3 oder der Eingabevorrichtung 5 infolge einer Gewichtsunregelmäßigkeit ausgelöste Aktivierung der Relais' dazu führt, dass von dem manuellen Betrieb in den Autopilot-Modus umgeschaltet wird und eine Legitimation durch Eingabe des persönlichen Codes angefordert wird. Auf diese Weise wird dem Szenario vorgebeugt, dass der oder die Entführer zuerst die Abschaltung des Autopiloten erzwingen und daran anschließend den Piloten verteidigungsunfähig machen und von seinem Sitz entfernen.

Es gilt jedoch zu vermeiden, dass diese Umschaltung von dem manuellen Betrieb in den Autopilot-Modus im normalen Flugbetrieb, also während des manuellen Starts oder der Landung, etwa durch eine von dem Piloten selbst ausgelöste unbeabsichtigte Gewichtsverlagerung ausgelöst wird. Diesbezüglich kann das Sicherheitssystem so konfiguriert sein, dass der Pilot zeitgleich mit der Umschaltung vom Autopilot-Modus auf Handbetrieb seinen persönlichen Code eingibt und damit bewirkt, dass das Sicherheitssystem auch bei späteren Gewichtsunregelmäßigkeiten keine Rückumschaltung herbeiführt. Für den Fall, dass die Entführer den Piloten oder Copiloten zwingen, den persönlichen Code preiszugeben und dann selbst den Autopiloten unter Eingabe dieses persönlichen Codes abschalten, kann vorgesehen sein, dass eine gewisse kurze Zeitspanne später eine erneute Code-Eingabe vom Sicherheitssystem angefordert wird und der Code einen zeitlich veränderlichen Anteil aufweist, dessen Eigenschaften den Entführern nicht bekannt sind. Beispielsweise kann jeder persönliche Code eine feste, unveränderliche Ziffernfolge aufweisen, die von einer veränderlichen Ziffernfolge gefolgt wird. Die veränderliche Ziffernfolge kann z.B. der Minutenstand einer im Cockpit befindlichen Uhr mit Ziffernanzeige sein, die mit einer im Sicherheitssystem enthaltenen Uhr synchronisiert ist. Dies ist den Entführern nicht bekannt, so dass sie nach der genannter Zeitspanne einen Code eingeben, der nicht korrekt ist, so dass die Legitimierung misslingt.

Innerhalb des Versorgungsbereichs des Sicherheitssystems, ggf. innerhalb der Eingabevorrichtung 5, kann eine Speichereinrichtung enthalten sein, in welcher personenbezogene Daten des Piloten und des Copiloten gespeichert werden können. Insbesondere können in dieser Speichereinrichtung Daten und Werte betreffend die körperlichen Merkmale des Piloten und des Copiloten gespeichert werden. Derartige Daten können beispielsweise während einer Initialisierungsphase vor dem Start durch die Detektionsmittel 3 erfasst und in die Speichereinrichtung eingespeichert werden. In dem bereits genannten Ausführungsbeispiel, in welchem die körperlichen Merkmale durch das Körpergewicht des Piloten gegeben sind, wird also anfänglich das Gewicht des in dem Pilotensitz sitzenden Piloten durch die in dem Pilotensitz integrierte Waage ermittelt und in die Speichereinrichtung eingeschrieben.

Alternativ dazu können die Detektionsmittel 3 auch durch eine Bilderfassungseinrichtung, einen Finger-/Hand-Abdrucksensor oder ein Mikrophon gebildet sein, durch welche entsprechende körperliche Merkmale des Piloten wie die Iris eines seiner Augen, sein Finger-/Handabdruck oder seine Stimme erfasst und entsprechende Daten in die Speichereinrichtung 12 eingeschrieben werden.

Es kann auch vorgesehen sein, dass Daten über körperlich-physische Merkmale des Piloten nicht in einer anfänglichen Initialisierungsphase durch die Detektionsmittel 3 erfasst und eingelesen werden, sondern dass diese von einem externen Speichermedium entnommen oder über eine Funkverbindung von extern übermittelt und in die Speichereinrichtung der Eingabevorrichtung 5 eingeschrieben werden.

Ferner kann innerhalb des Versorgungsbereichs des Sicherheitssystems, ggf. innerhalb der Eingabevorrichtung 5, eine Vergleichereinrichtung enthalten sein, in welcher durch die Detektionsmittel 3 erfasste Daten und Werte über körperliche Merkmale mit solchen in der Speichereinrichtung eingespeicherten Werten verglichen werden können. Insbesondere dann, wenn eine aktuelle Messung körperlicher Merkmale wie des Gewichts durch die Detektionsmittel 3 und ein Vergleich mit dem in der Speichereinrichtung abgespeicherten Wert durch die Vergleichereinrichtung ergibt, dass die zu vergleichenden Werte außerhalb einer bestimmten Toleranzbandbreite voneinander abweichen, gibt die Vergleichereinrichtung beispielsweise ein entsprechendes Signal an den in der Eingabevorrichtung 5 enthaltenen Prozessor ab, welcher daraufhin die Relaisschaltungen des Autopiloten 1 anspricht.

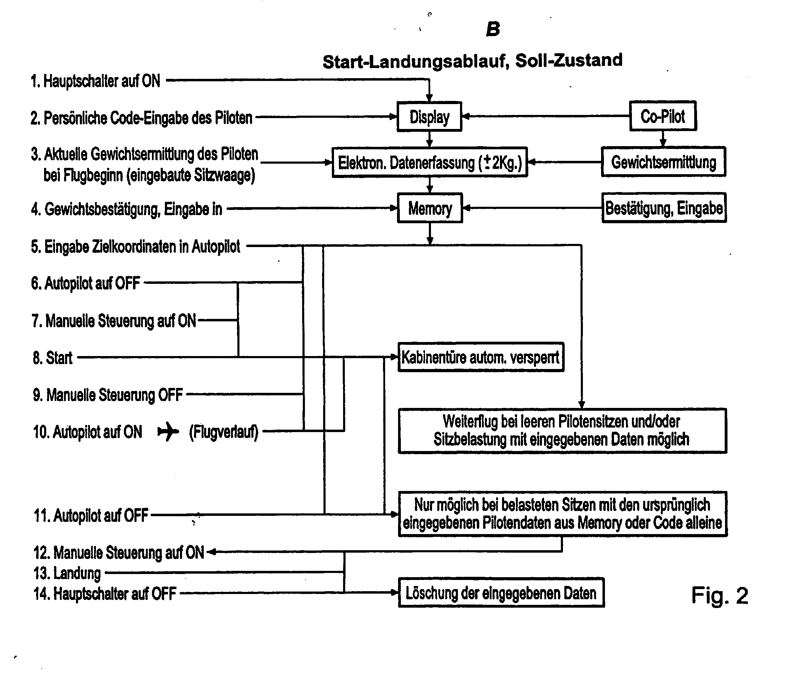

Ein beispielhaftes Ablaufdiagramm für einen Start-Landungsablauf unter Verwendung eines erfindungsgemäßen Sicherheitssystems ist in Fig. 2 dargestellt.

Im Falle von Gewichtsmessungen kann die bereits genannte Toleranzbandbreite im Bereich von ± 1,5 oder ± 2 kg betragen.

Die vorliegende Erfindung ist nicht auf die Anwendung in "Fly-by-Wire"-Steuersystemen beschränkt. Sie kann ebenso Anwendung finden in Verkehrsflugzeugen, in welchen die Steuereinrichtungen im Cockpit direkt mechanisch, d.h. in der Regel über Drahtseile, mit den Steuerrudern des Flugzeugs verbunden sind. Bei diesen Steuerungssystemen ist zwar in der Regel auch ein Flugcomputer vorhanden; dieser hat dann aber nicht mehr die Aufgabe, elektronische Signale von den Steuerungseinrichtungen zusammenzuführen und an die Steuerruder weiterzuleiten. Auch in diesen Steuerungssystemen, die nicht auf der "Fly-by-Wire"-Technik beruhen, kann jedoch ein Autopilot vorhanden sein, der auf der Basis eingegebener Zieldaten in die Mechanik eingreift und die Steuerruder in bestimmter Weise einstellt. Auch dieser Autopilot kann dann aktiviert und deaktiviert werden, um zwischen automatischen und manuellen Flugbetrieb zu wechseln.

## Patentansprüche

1. Sicherheitssystem für die zwischen automatischem und manuellem Flugbetrieb umschaltbare Steuerung eines Luftfahrzeugs,
**gekennzeichnet durch**
- Mittel (3) zur Detektion körperlicher Merkmale von Personen,
- Mittel zur Verhinderung der Umschaltung von automatischem auf manuellen Flugbetrieb, falls automatischer Flugbetrieb eingestellt ist und die von den Detektionsmitteln (3) erfassten körperlichen Merkmale nicht mit vorgegebenen Körperlichen Merkmalen übereinstimmen, und
- Mittel zur Umschaltung von manuellem Flugbetrieb auf automatischen Flugbetrieb oder zur Deaktivierung des manuellen Flugbetriebs, falls manueller Flugbetrieb eingestellt ist und die von den Detektionsmitteln (3) erfassten körperlichen Merkmale nicht mit vorgegebenen körperlichen Merkmalen übereinstimmen.

2. Sicherheitssystem nach einem der vorhergehenden Ansprüche,
**dadurch gekennzeichnet, dass**
- eine Eingabevorrichtung (5) für die Eingabe eines persönlichen Codes vorgesehen ist, wobei
- die erneute Eingabe eines legitimierten persönlichen Codes die Deaktivierung der Verhinderungsmittel und/oder die Aktivierbarkeit des manuellen Flugbetriebs bewirkt.

3. Sicherheitssystem nach Anspruch 1 oder 2,
**dadurch gekennzeichnet, dass**
- die körperlichen Merkmale das auf dem Pilotensitz oder dem Copilotensitz lastende Körpergewicht sind, und
- die Detektionsmittel (3) einen Gewichtssensor umfassen.

4. Sicherheitssystem nach Anspruch 3,
**dadurch gekennzeichnet, dass**
- die körperlichen Merkmale als ein unterer Gewichts-Schwellenwert vorgegeben sind und der Gewichtssensor bei Unterschreiten des unteren Gewichts-Schwellenwertes ein Signal an die Verhinderungsmittel abgibt.

5. Sicherheitssystem nach Anspruch 4,
**dadurch gekennzeichnet, dass**
- weitere körperliche Merkmale in Form eines oberen Gewichts-Schwellenwerts vorgegeben sind und der Gewichtssensor bei Überschreiten des oberen Gewichts-Schwellenwertes ein Signal an die Verhinderungsmittel abgibt.

6. Sicherheitssystem nach einem der vorhergehenden Ansprüche,
**dadurch gekennzeichnet, dass**
- die Verhinderungsmittel und die Umschaltungs-/Deaktivierungsmittel elektrische, elektronische oder elektromagnetische Schalter, insbesondere Relais, aufweisen, mit welchen Stromkreise für die Umschaltung zwischen manuellem und automatischem Flugbetrieb geöffnet oder geschlossen werden können.

7. Sicherheitssystem nach Anspruch 6,
**dadurch gekennzeichnet, dass**
eine Anzahl Umschalter zwischen manuellem und automatischen Flugbetrieb vorgesehen sind und mit jedem Umschalter ein Relais oder dergleichen gekoppelt ist.

8. Sicherheitssystem nach Anspruch 3 und einem der Ansprüche 6 oder 7,
**dadurch gekennzeichnet, dass**
- ein oder mehrere Gewichtssensoren vorhanden sind und jeder der Gewichtssensoren mit jedem der Relais oder dergleichen gekoppelt ist.

9. Sicherheitssystem nach einem der vorhergehenden Ansprüche,
**dadurch gekennzeichnet, dass**
- die Verhinderungsmittel und die Umschaltungs-/Deaktivierungsmittelvon dem Stromnetz des Luftfahrzeugs unabhängig sind, insbesondere dass sie an eine eigene elektrische Leistungsversorgung wie eine Batterie angeschlossen sind.

10. Steuerungssystem für ein Luftfahrzeug, enthaltend ein Sicherheitssystem nach einem oder mehreren der vorherigen Ansprüche.

11. Verfahren zur Verhinderung der manuellen Steuerung eines Flugzeugs durch Unbefugte, mit den Schritten
- Detektieren körperlicher Merkmale von Personen, und
- Verhindern der Umschaltung von automatischem auf manuellen Flugbetrieb, falls automatischer Flugbetrieb eingestellt ist und die detektierten körperlichen Merkmale nicht mit vorgegebenen körperlichen Merkmalen übereinstimmen, und
- Umschalten von manuellem Flugbetrieb auf automatischen Flugbetrieb oder Deaktivieren des manuellen Flugbetriebs, falls manueller Flugbetrieb eingestellt ist und die detektierten körperlichen Merkmale nicht mit vorgegebenen körperlichen Merkmalen übereinstimmen.

## Claims

1. Security system for the control of an aircraft switchable between automatic and manual flight operation,
**characterized by**
- means (3) for detecting physical characteristics of individuals,
- means for preventing the switching from automatic to manual flight operation, if automatic flight operation is set and the physical characteristics detected by the detection means do not match predefined physical characteristics, and
- means for switching from manual to automatic flight operation or for deactivating manual flight operation, if manual flight operation is set and the physical characteristics detected by the detection means do not match predefined physical characteristics.

2. Security system according to claim 1,
**characterized in that**
- an input device (5) for inputting a personal code is provided, whereby
- the repeated inputting of an authorized personal code effects the deactivation of the preventing means and/or the capability to activate manual flight operation.

3. Security system according to claim 1 or 2,
**characterized in that**
- the physical characteristics comprise the body weight resting on the pilot seat or the copilot seat, and
- the detection means (3) comprise a weight sensor.

4. Security system according to claim 3,
**characterized in that**
- the physical characteristics are preset as a lower weight threshold value and the weight sensor outputs a signal to the preventing means if the weight falls below the lower weight threshold value.

5. Security system according to claim 4,
**characterized in that**
- the physical characteristics further comprise a preset higher weight threshold value and the weight sensor outputs a signal to the preventing means if the weight rises above the preset higher weight threshold value.

6. Security system according to anyone of the preceding claims,
**characterized in that**
- the preventing means and the switching/deactivating means comprise electrical, electronic or electro-magnetic switches, in particular relays, with which electrical circuits for the switch-over between manual and automatic flight operation can be opened or closed.

7. Security system according to claim 6,
**characterized in that**
- a plurality of change-over switches between manual and automatic flight operations are provided and a relay is coupled to each of the change-over switches.

8. Security system according to claim 3 and one of claims 6 or 7,
**characterized in that**
- one or more weight sensors are provided and each of the one or more weight sensors is coupled to each of the relays or the like.

9. Security system according to anyone of the preceding claims,
**characterized in that**
- the preventing means and the switching/deactivating means are independent from an electric circuitry of the aircraft and, in particular, are coupled to an autonomous power supply like a battery.

10. Control system for an aircraft, comprising a security system according to one or more of the preceding claims.

11. Method for preventing the manual control of an airplane by unauthorized individuals, comprising the steps
- detecting physical characteristics of individuals, and
- preventing the switching from automatic to manual flight operation, if automatic flight operation is set and the detected physical characteristics do not match predefined physical characteristics, and
- switching from manual flight operation to automatic flight operation or deactivating the manual flight operation, if manual flight operation is set and the detected physical characteristics do not match predefined physical characteristics.

## Revendications

1. Système de sécurité pour la commande d'un aéronef, laquelle peut être commutée entre un mode de vol automatique et un mode de vol manuel,
**caractérisé par** :
- des moyens (3) pour détecter les caractéristiques corporelles des personnes ;
- des moyens pour empêcher la commutation du mode de vol automatique sur le mode de vol manuel si le mode de vol automatique est ajusté et si les caractéristiques corporelles saisies par les moyens de détection (3) ne concordent pas avec les caractéristiques corporelles prescrites ; et
- des moyens pour commuter du mode de vol manuel sur le mode de vol automatique ou pour désactiver le mode de vol manuel si le mode de vol manuel est ajusté et si les caractéristiques corporelles saisies par les moyens de détection (3) ne concordent pas avec les caractéristiques corporelles prescrites.

2. Système de sécurité selon la revendication 1,
**caractérisé en ce que** :
- un dispositif de saisie (5) est prévu pour la saisie d'un code personnel, sachant que
- le fait de saisir à nouveau un code personnel légitimé occasionne la désactivation des moyens d'empêchement et/ou la capacité d'activation du mode de vol manuel.

3. Système de sécurité selon l'une ou l'autre des revendications 1 et 2,
**caractérisé en ce que** :
- les caractéristiques corporelles sont le poids corporel qui repose sur le siège du pilote ou sur le siège du copilote, et
- les moyens de détection (3) comportent un capteur de poids.

4. Système de sécurité selon la revendication 3,
**caractérisé :**
- **en ce que** les caractéristiques corporelles sont prescrites comme une valeur inférieure de seuil pondéral et en ce que le capteur de poids émet un signal à l'attention du moyen de liaison lorsque la valeur inférieure de seuil pondéral n'est pas atteinte.

5. Système de sécurité selon la revendication 4,
**caractérisé :**
- **en ce que** d'autres caractéristiques corporelles sont prescrites sous la forme d'une valeur supérieure de seuil pondéral et en ce que le capteur de poids émet un signal à l'attention du moyen de liaison lorsque la valeur supérieure de seuil pondéral est dépassée.

6. Système de sécurité selon l'une des revendications précédentes,
**caractérisé en ce que** :
- les moyens d'empêchement et les moyens de commutation/désactivation présentent des interrupteurs électriques, électroniques ou électromagnétiques, en particulier des relais, avec lesquels des circuits de courant peuvent être ouverts ou fermés pour la commutation entre le mode de vol manuel et le mode de vol automatique.

7. Système de sécurité selon la revendication 6,
**caractérisé :**
- **en ce qu'**un certain nombre de commutateurs sont prévus entre le mode de vol manuel et le mode de vol automatique et en ce qu'un relais ou similaire est accouplé à chaque commutateur.

8. Système de sécurité selon la revendication 3 et selon l'une ou l'autre des revendications 6 et 7,
**caractérisé :**
- **en ce qu'**un ou plusieurs capteurs de poids sont présents et en ce que chacun des capteurs de poids est accouplé à chacun des relais ou similaires.

9. Système de sécurité selon l'une des revendications précédentes,
**caractérisé en ce que** :
- les moyens d'empêchement et les moyens de commutation/désactivation sont indépendants du réseau électrique de l'aéronef, en particulier **en ce qu'**ils sont raccordés à une propre alimentation en puissance électrique, telle qu'une batterie.

10. Système de commande pour un aéronef, contenant un système de sécurité selon l'une ou plusieurs des revendications précédentes.

11. Procédé pour empêcher la commande manuelle d'un avion par des personnes non autorisées, comprenant les étapes suivantes :
- détecter les caractéristiques corporelles des personnes, et
- empêcher la commutation du mode de vol automatique sur le mode de vol manuel si le mode de vol automatique est ajusté et si les caractéristiques corporelles saisies par les moyens de détection (3) ne concordent pas avec les caractéristiques corporelles prescrites ; et
- commuter du mode de vol manuel sur le mode de vol automatique ou désactiver le mode de vol manuel si le mode de vol manuel est ajusté et si les caractéristiques corporelles saisies par les moyens de détection (3) ne concordent pas avec les caractéristiques corporelles prescrites.
